# EUROPEAN PATENT APPLICATION

(11) **EP 2 645 015 A2**
(43) Date of publication of application: **02.10.2013**
(21) Application number: 13151602.3
(22) Date of filing: 17.01.2013
(51) Int. Cl.: F25B 21/00

(54) **Magnetic refrigeration device and magnetic refrigeration system**

(30) Priority: 29.03.2012 JP 2012076718
(71) Applicant: Kabushiki Kaisha Toshiba, Tokyo 105-8001 (JP)
(72) Inventor: Tomimatsu, Norihiro, Tokyo, 105-8001 (JP); Hiraoka, Toshiro, Tokyo, 105-8001 (JP); Sanada, Yasushi, Tokyo, 105-8001 (JP); Yagi, Ryosuke, Tokyo, 105-8001 (JP); Saito, Akiko, Tokyo, 105-8001 (JP); Kobayashi, Tadahiko, Tokyo, 105-8001 (JP); Kaji, Shiori, Tokyo, 105-8001 (JP)
(74) Representative: HOFFMANN EITLE

(57) **Abstract**

In a magnetic refrigeration device, magnetic bodies having a magnetocaloric effect and solid heat accumulation members (3, 3A, 3B) having heat accumulation effect are arranged alternately with gaps (4) therebetween. Magnetic field apply units (6A, 6B) start and stop application of magnetic fields to the magnetic bodies. A contact mechanism brings each of the magnetic bodies into contact with one of the solid heat accumulation members (3, 3A, 3B) adjacent to the each magnetic body (2). Alternatively, the contact mechanism brings each of the solid heat accumulation members (3, 3A, 3B) into contact with one of the magnetic bodies adjacent to the each solid heat accumulation members (3, 3A, 3B).

## Description

### FIELD

Embodiments described herein relate generally to magnetic refrigeration devices and magnetic refrigeration systems.

### BACKGROUND

In recent years, there is an increasing demand for magnetic refrigeration as one refrigeration technique of high refrigeration efficiency, and research and development of magnetic refrigeration techniques targeted for room temperature have now been intensified.

As one of the magnetic refrigeration techniques, active magnetic refrigeration (AMR) system has been proposed. In the AMR system, lattice entropy regarded as a disincentive for magnetic refrigeration at room temperature is positively utilized, and both a function of performing magnetic refrigeration and a function of accumulating the cold energy generated by the magnetic refrigeration are imparted to a magnetic substance.

Typical AMR apparatuses have a structure, in which a heat exchange fluid, such as water, is made to flow in a magnetic container filled with, for example, magnetic particles, and is moved back and forth in synchronism with application/elimination of a magnetic field to the magnetic container. As a result, refrigeration cycle is realized.

In the AMR cycle, no compressors are needed and hence little motive energy is required. Therefore, the AMR cycle is expected to provide a higher refrigeration efficiency than conventional refrigeration systems based a compression cycle using chlorofluorocarbon.

However, to increase the rate of the magnetic refrigeration cycle for downsizing the device or higher output, it is necessary to make the heat exchange fluid flow in the magnetic container at higher rate. This may involve high fluid pressure loss, thereby reducing the refrigeration efficiency.

### BRIEF DESCRIPTION OF THE DRAWINGS

FIG. 1 is a schematic cross-sectional view illustrating a magnetic refrigeration device according to a first embodiment;
FIG. 2A is a schematic cross-sectional view illustrating another magnetic substance with flexibility shown in FIG. 1;
FIG. 2B is a schematic cross-sectional view illustrating yet another magnetic substance with flexibility shown in FIG. 1;
FIG. 2C is a schematic cross-sectional view illustrating a further magnetic substance with flexibility shown in FIG. 1;
FIG. 3A is a schematic cross-sectional view explaining the operation of the magnetic refrigeration device shown in FIG. 1;
FIG. 3B is another schematic cross-sectional view explaining the operation of the magnetic refrigeration device shown in FIG. 1;
FIG. 4 is a schematic cross-sectional view explaining the operation of a magnetic refrigeration device according to a second embodiment;
FIG. 5 is a schematic cross-sectional view illustrating a unit structure of a magnetic refrigeration device according to a third embodiment;
FIG. 6 is a schematic cross-sectional view illustrating a magnetic refrigeration device according to a fourth embodiment;
FIG. 7 is a schematic cross-sectional view explaining the operation of the magnetic refrigeration device shown in FIG. 6;
FIG. 8 is another schematic cross-sectional view explaining the operation of the magnetic refrigeration device shown in FIG. 6;
FIG. 9 is a schematic cross-sectional view illustrating a magnetic refrigeration device according to a modification of the fourth embodiment;
FIG. 10A is a schematic cross-sectional view illustrating the operation of a unit structure in a magnetic refrigeration device according to another modification of the fourth embodiment;
FIG. 10B is a schematic cross-sectional view illustrating the operation of a unit structure in a magnetic refrigeration device according to yet another modification of the fourth embodiment;
FIG. 10C is a schematic cross-sectional view illustrating the operation of a unit structure in a magnetic refrigeration device according to a further another modification of the fourth embodiment;
FIG. 11 is a schematic cross-sectional view illustrating a magnetic refrigeration device according to a fifth embodiment;
FIG. 12 is a schematic perspective view illustrating a magnetic refrigeration system according to a sixth embodiment;
FIG. 13 is a schematic plan view illustrating the configuration of the elements of a magnetic refrigeration system according to a seventh embodiment; and
FIG. 14 is a schematic plan view illustrating the configuration of the elements of a magnetic refrigeration system according to an eighth embodiment.

### DETAILED DESCRIPTION

In general, according to an embodiment, there is provided a magnetic refrigeration device comprising:
a plurality of stationary members arranged in parallel with each other, with gaps defined between adjacent ones of the stationary members, each of the stationary members being formed of one of a magnetic body having a magnetocaloric effect, and a solid heat accumulation member having a heat accumulation effect, the adjacent ones of the stationary members opposing each other;
a plurality of movable members arranged in parallel with each other, and permitted to be brought into contact with the adjacent stationary members within the respective gaps and thermally connected to the adjacent stationary members, each of the movable members being formed of the other of the magnetic body and the solid heat accumulation member;
a magnetic field apply unit configured to start and stop application of a magnetic field to the magnetic body; and
a moving mechanism configured to selectively bring the movable members to the corresponding stationary members in synchronism with the start and stop of the application of the magnetic field of the magnetic field apply unit.

According to another embodiment, there is provided a magnetic refrigeration system comprising:
a plurality of magnetic refrigeration devices arranged substantially along a circle and each including:
   a stationary members arranged in parallel with each other, with gaps defined between adjacent ones of the stationary members, each of the stationary members being formed of one of a magnetic body having a magnetocaloric effect, and a solid heat accumulation member having a heat accumulation effect, the adjacent ones of the stationary members opposing each other; and
   a plurality of movable members arranged in parallel with each other, and permitted to be brought into contact with the adjacent stationary members within the respective gaps and thermally connected to the adjacent stationary members, each of the movable members being formed of the other of the magnetic body and the solid heat accumulation member;
at least one magnetic field apply unit provided along the circle over or below the plurality of magnetic refrigeration devices and configured to start and stop application of a magnetic field to the magnetic body; and
a moving mechanism circle configured to selectively bring the movable members to the corresponding stationary members in synchronism with the start and stop of the application of the magnetic field of the magnetic field apply unit.

Referring to the accompanying drawings, descriptions will be given of magnetic refrigeration devices and magnetic refrigeration systems incorporating the magnetic refrigeration devices, according to embodiments.

### (First Embodiment)

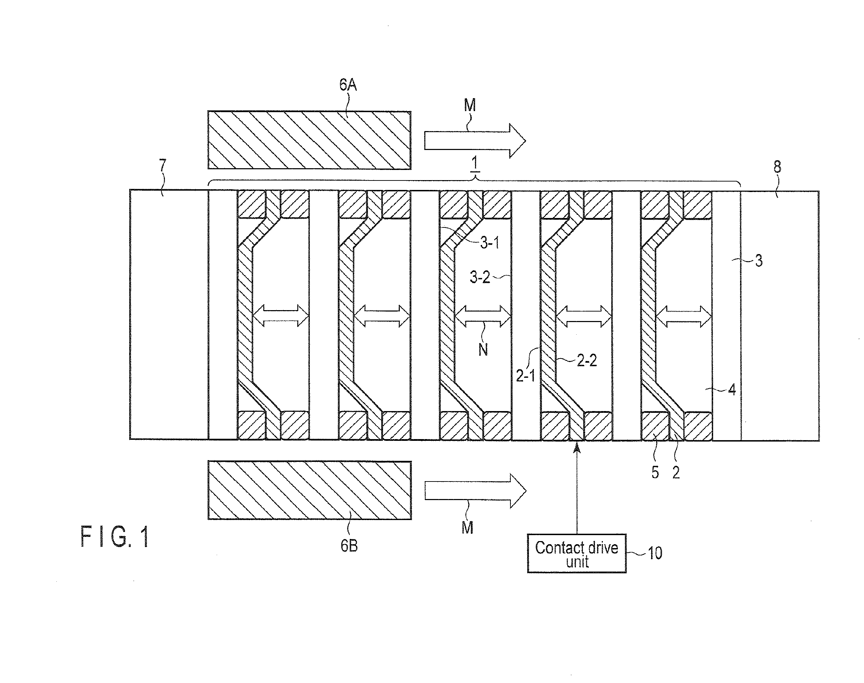

FIG. 1 shows a magnetic refrigeration system according to a first embodiment. This magnetic refrigeration system comprises a magnetic refrigeration device 1. The magnetic refrigeration device 1 has the following structure: A plurality of plate-like solid heat accumulation members 3, which have a heat accumulation function and are formed rigid, are arranged in parallel to each other. The solid heat accumulation members 3 are provided as stationary members. Spaces 4 are defined between the respective pairs of the adjacent solid heat accumulation members. Plate-like magnetic bodies 2, which have a magnetocaloric effect and are flexible, are provided in the spaces 4 defined between the respective pairs of the adjacent solid heat accumulation members 3, and are arranged in parallel to each other. The magnetic bodies 2 are provided as movable members. The magnetic bodies can be brought into thermal contact with the adjacent solid heat accumulation members 3. The solid heat accumulation members 3 and the magnetic bodies 2 are arranged alternately. Spacers 5 that define the spaces 4 are provided between the adjacent solid heat accumulation members 3 such that they support the opposite ends of each of the magnetic bodies 2.

Each plate-like magnetic body 2 has a first surface 2-1 kept in contact with one inner surface 3-1 of one of the two solid heat accumulation members 3 adjacent to said each magnetic body 2, and also has a second surface 2-2 opposing one surface 3-2 of the other of the two solid heat accumulation members 3. The magnetic refrigeration system also comprises a contact drive unit 10 capable of moving the plate-like magnetic bodies 2 in directions N relative to the solid heat accumulation members 3. The contact drive unit 10 is formed of, for example, a voltage driving mechanism for electrostatically driving the plate-like magnetic bodies 2.

In the electrostatic drive mechanism, first and second voltages are selectively applied from the outside to the plate-like magnetic bodies 2 and the solid heat accumulation members 3. When the first voltage is applied to the plate-like magnetic bodies 2 and the solid heat accumulation members 3, the inner surface 3-1 of the aforementioned one solid heat accumulation member 3 is brought into contact with the first surface 2-1 of said each plate-like magnetic body 2. If the applied voltage is switched from the first voltage to the second voltage, said each plate-like magnetic body 2 is deformed toward the inner surface 3-2 of the other solid heat accumulation member 3 to thereby bright the second surface 2-2 of said each magnetic body 2 into contact with the inner surface 3-2. After that, if the applied voltage is switched from the second voltage to the first voltage, said each plate-like magnetic body 2 is deformed toward the inner surface 3-1 of the one solid heat accumulation member 3 to thereby bright the first surface 2-1 into contact with the inner surface 3-1.

The operation of the magnetic refrigeration device 1 will now be described in detail. When each magnetic body 2 generates heat, the first surface 2-1 thereof is brought into contact with the inner surface 3-1 of the one solid heat accumulation member 3. As a result, the heat is conducted from said each magnetic body 2 to the one solid heat accumulation member 3 to thereby increase the temperature of the one solid heat accumulation member 3. Further, as will be described in detail, when each magnetic body 2 absorbs heat, the second surface 2-2 thereof is brought into contact with the inner surface 3-2 of the other solid heat accumulation member 3, with the result that the heat of the other solid heat accumulation member 3 is absorbed by said each magnetic body 2 and is therefore cooled.

The solid heat accumulation member 3 located on one outermost side of the magnetic refrigeration device 1 is kept in thermal contact with a high-temperature-side heat exchanger 7, while the solid heat accumulation member 3 located on the other outermost side of the magnetic refrigeration device 1 is kept in thermal contact with a low-temperature-side heat exchanger 8. When the magnetic refrigeration device 1 performs heat absorption/dissipation as described above, heat is conducted from the low-temperature-side heat exchanger 8 side to the high-temperature-side heat exchanger 7 side, whereby the heat of the low-temperature-side heat exchanger 8 is most absorbed and the temperature of the high-temperature-side heat exchanger 7 is most increased. As a result, the exchanger 8 is cooled and the heat of the exchanger 7 is externally dissipated.

Along the longitudinal axis of the magnetic refrigeration device 1, magnetic field apply units 6A and 6B are provided so that they can move in a direction M parallel to the longitudinal axis. When the magnetic field apply units 6A and 6B move in the direction M, they apply magnetic fields to the magnetic bodies 2. On the other hand, when the magnetic field apply units 6A and 6B move in the direction opposite to the direction M, the applied magnetic fields gradually disappear. In synchronism with the application and elimination of the magnetic fields of the magnetic field apply units 6A and 6B, the contact drive unit 10 is operated to bring each magnetic body 2 into contact with one of the corresponding adjacent solid heat accumulation members 3. As a result, in the magnetic refrigeration device 1, heat is conducted by heat absorption or heat dissipation occurring in the magnetic bodies 2, whereby the low-temperature-side heat exchanger 8 is cooled and the high-temperature-side heat exchanger 7 dissipates heat.

As described above, the magnetic refrigeration device of the first embodiment does not require a power source, such as a pump, for moving a refrigerant, and hence can increase the rate of refrigeration cycle. Accordingly, the magnetic refrigeration device of the first embodiment can be made compact and to have a high output. Further, if the magnetic refrigeration device of the first embodiment is used in a magnetic refrigeration system, the system can be made compact and to have a high output.

Although in the magnetic refrigeration device 1 shown in FIG. 1, the magnetic bodies 2 are formed as movable members having flexibility, the magnetic refrigeration device 1 may be modified such that the magnetic bodies 2 have rigidity and are immovably fixed in position, and the solid heat accumulation members 3 are, instead, formed as movable members having flexibility. Namely, in the magnetic refrigeration device 1 shown in FIG. 1, the solid heat accumulation members 3 may be formed as movable (deformable) members having flexibility so that they is movable (deformable) in the direction N. In this case, each solid heat accumulation member 3 is deformed and brought into contact with the corresponding rigid magnetic bodies 2 opposing each other.

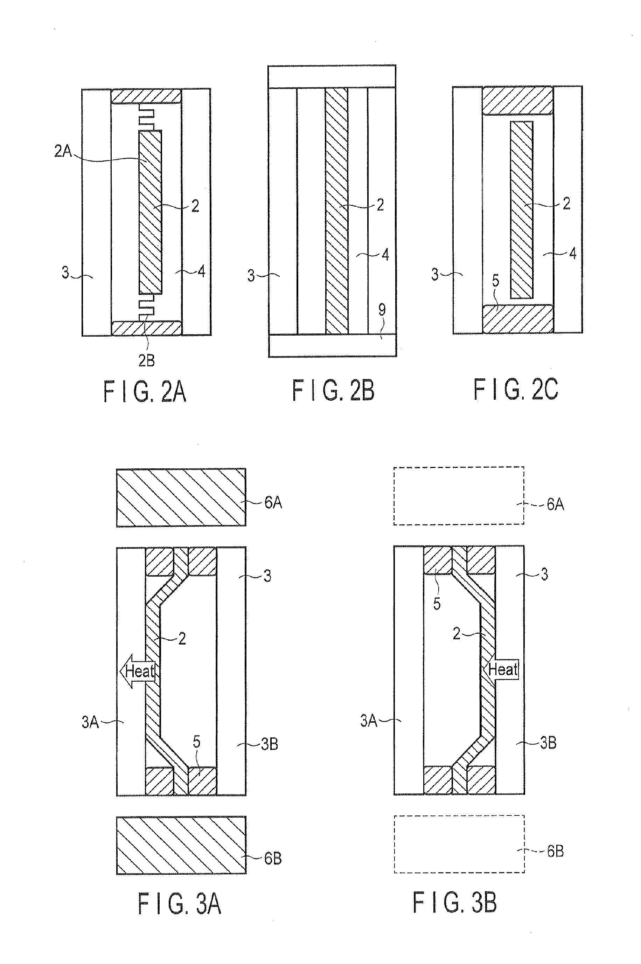

Further, although in the magnetic refrigeration device 1 shown in FIG. 1, the magnetic bodies 2 as movable members have a structure in which they are formed of a single material to have deformable flexibility at their proximal ends, they may each have a structure as shown in FIG. 2A, which comprises a contact portion 2A to be brought into contact with the corresponding solid heat accumulation members 3 as stationary members, and support portions 2B supporting the contact portion 2A. For instance, the support members 2B may preferably have a flexible structure formed of a material having a high fatigue resistance, such as iron, since they will repetitively receive pressure.

Furthermore, to prevent fatigue breaking, the magnetic bodies 2 may be constructed as shown in FIG. 2B. In this case, the support portions 2B of the magnetic bodies 2 as movable members are not fixed, but are slidable along guides 9 that are employed in place of the spacers 6 and extend along the longitudinal axis of the device 1 (i.e., extend parallel to the direction N). Along the guides 9, the magnetic bodies 2 are brought into contact with the solid heat accumulation members 3. Alternatively, each magnetic body 2 as a movable member may be constructed as shown in FIG. 2C such that it is not fixed at any portion thereof, and is smoothly movable in the direction N on the corresponding spacer 5 in the corresponding gap 4.

If the solid heat accumulation members 3 are formed flexible instead of the magnetic bodies 2 as mentioned above, they may have the structures of FIGS. 2A to 2C, like the magnetic bodies 2 shown in FIGS. 2A to 2C.

The magnetic bodies 2 having a magnetocaloric effect, according to the first embodiment, are not limited in material. It is sufficient if the magnetic bodies exhibit the magnetocaloric effect. For instance, the magnetic bodies may be formed of Gd (Gadolinium), a Gd compound mixed with various elements, an intermetallic compound comprising various rare earth elements and transition metal elements, an Ni₂MnGa alloy, a GdGeSi-based compound, an LaFe₁₃-based compound, an LaFe₁₃H-based compound, etc. Further, the magnetic bodies are not limited to the plate-like shape, but may have other shapes, such as foil or the aforementioned flexible shapes.

The solid heat accumulation members 3 of the first embodiment are not limited in material, but may be formed of a metal, such as Al (aluminum), Cu (copper), Fe (iron) or stainless steel, or of a non-metallic material, such as silicon or carbon, or of ceramic, such as AlN (aluminum nitride), SiC (silicon carbide), alumina, or a composite of these materials. However, in light of speedup of the magnetic refrigeration cycle, it is preferable to select a material of a high heat conductivity. Further, the solid heat accumulation members 3 are not limited to the plate-like shape, but may have other shapes, such as foil or the aforementioned flexible shapes.

In consideration of thermal conduction, the magnetic bodies 2 and the solid heat accumulation members 3 may preferably be formed to have thicknesses and areas so that they have substantially the same heat capacity.

The magnetic field apply units 6A and 6B are arranged outside the magnetic refrigeration device 1, with the device 1 interposed therebetween, thereby forming a magnetic circuit. The magnetic field apply units 6A and 6B may be formed of permanent magnets or electromagnets.

The magnetic field apply units 6A and 6B can be moved in the direction indicated by arrows N in FIG. 1 by a moving mechanism (not shown). As mentioned above, by moving the magnetic field apply units 6A and 6B, application and removal of a magnetic field to and from the magnetic bodies 2 can be realized.

When the magnetic field apply units 6A and 6B are formed of electromagnets, application and removal of a magnetic field to and from the magnetic bodies 2 can be realized simply by permitting/interrupting the flow of current through the magnets, without moving the units 6A and 6B. Thus, in this case, no moving mechanism is necessary.

Referring now to FIGS. 3A and 3B, the principle of basic heat conduction in the magnetic refrigeration device 1 will be described in more detail.

FIG. 3A shows a state in which the magnetic field apply units 6A and 6B apply a magnetic field to the magnetic body 2. When the magnetic field apply units 6A and 6B apply a magnetic field to the magnetic body 2, the temperature of the magnetic body 2 is increased by the magnetocaloric effect. At this time, the magnetic body 2 is in contact with the solid heat accumulation member 3A, and the heat produced is conducted to the solid heat accumulation member 3A. Subsequently, as shown in FIG. 3B, the magnetic field apply units 6A and 6B are moved or are stopped to generate a magnetic field, thereby causing the magnetic field to disappear. As a result, the temperature of the magnetic body is reduced by the magnetocaloric effect. In accordance with the reduction of the temperature of the magnetic body, the magnetic body 2 is brought into contact with the solid heat accumulation member 3B, whereby heat is conducted from the solid heat accumulation member 3B to the magnetic body 2. If this operation is repeated in an adiabatic state, the heat is conducted from the solid heat accumulation member 3B to the solid heat accumulation member 3A, whereby a temperature difference will occur by a thermal storage effect between the accumulation members 3A and 3B.

The magnetic refrigeration device 1 shown in FIG. 1 has a stacked structure in which a plurality of unit structures similar to that shown in FIG. 3A are stacked. In this structure, temperature differences caused by the unit structures are held. Thus, in the magnetic refrigeration device 1, a great temperature difference is obtained at the opposite ends of the device.

Further, in the magnetic refrigeration device 1, the heat conducted to an end of the stacked structure is dissipated to the outside via the high-temperature-side heat exchanger 7. In contrast, at the lower temperature end, heat is absorbed from the outside via the low-temperature-side heat exchanger 8. The high-temperature-side heat exchanger 7 and the low-temperature-side heat exchanger 8 are formed of, for example, Cu (copper) of a high thermal conductivity.

### (Second Embodiment)

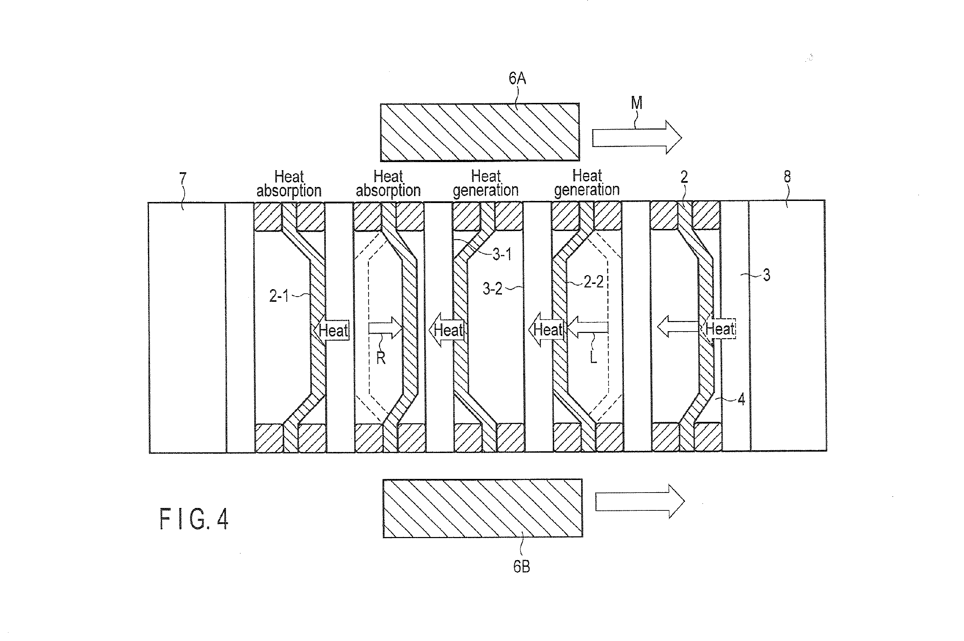

Referring then to FIG. 4, a description will be given of a magnetic refrigeration system according to a second embodiment. In the magnetic refrigeration system shown in FIG. 4, each magnetic body 2 (movable member) in the magnetic refrigeration device 1 is kept away from one of the corresponding solid heat accumulation member 3 and kept in contact with the other solid heat accumulation member 3 (stationary member) by the magnetic attractive forces applied by external magnetic fields. Namely, switching of magnetic member pairs is realized by the driving forces based on the magnetic attractive forces applied by the external magnetic fields.

In the magnetic refrigeration device 1 incorporated in the magnetic refrigeration system of the second embodiment shown in FIG. 4, the magnetic bodies 2 are constructed as movable members. By moving the magnetic field apply units 6A and 6B, application and removal of a magnetic field to and from the magnetic bodies 2 are realized, whereby the temperature of the magnetic bodies 2 are increased or reduced as a result of the magnetocaloric effect. At the same time, magnetic attractive forces are exerted between the magnetic field apply units 6A and 6B and the magnetic bodies 2. Accordingly, when the magnetic field apply units 6A and 6B are moved rightward in FIG. 4, the temperatures of the magnetic bodies 2 as movable members, toward which the magnetic field apply units 6A and 6B move, increase. At the same time, the proximal ends of the magnetic bodies 2 are successively attracted and deformed by the magnetic attractive forces of the magnetic field apply units 6A and 6B. As a result, each magnetic body 2 itself is moved leftward and brought into contact with the right surface of the corresponding solid heat accumulation member 3 as indicated by arrow L, to conduct its heat to the surface. When the magnetic field apply units 6A and 6B are moved away from said each magnetic body 2, the temperature of said each magnetic body 2 as a movable member reduces. At the same time, said each magnetic body 2 is moved rightward and brought into contact with the left surface of the corresponding solid heat accumulation member 3 by the magnetic attractive forces of the magnetic field apply units 6A and 6B, as is indicated by arrow R, thereby absorbing the heat thereof. As a result of the above-mentioned series of operations, heat is conducted from the low-temperature-side heat exchanger 8 to the high-temperature-side heat exchanger 7, and a temperature difference occurs because of thermal accumulation effect between the solid heat accumulation members 3 located at opposite ends of the device 1.

### (Third Embodiment)

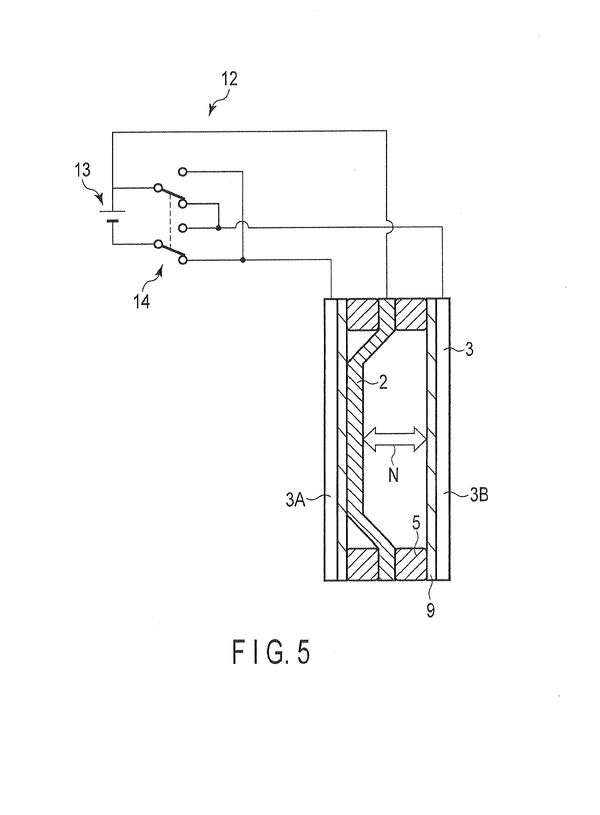

Referring then to FIG. 5, a magnetic refrigeration system according to a third embodiment will be described. In a magnetic refrigeration device 1 incorporated in the magnetic refrigeration system shown in FIG. 5, the forces for driving a magnetic body 2 (movable member) are imparted as electrostatic forces, whereby the solid heat accumulation member 3 (stationary member), with which the magnetic body 2 is brought into contact, is switched between the two solid heat accumulation members 3.

FIG. 5 shows the unit structure of the magnetic refrigeration device 1. In this device, it is sufficient if either the magnetic body 2 or the solid heat accumulation member 3 is set as a movable member. In the second embodiment shown in FIG. 5, the magnetic body 2 is set as a movable member. A voltage is applied between the magnetic body 2 and each of the solid heat accumulation members 3A and 3B for generating an electrostatic force therebetween. The solid heat accumulation members 3A and 3B are formed of a conductive material that can serve as an electrode. Further, an insulation layer (dielectric layer) 9 is provided on the surface of each of the solid heat accumulation members 3A and 3B that oppose the magnetic body 2. A switching circuit 12 serving as a driving circuit and capable of switching the voltage polarity of the magnetic body 2 or the solid heat accumulation members 3A and 3B is connected to the magnetic refrigeration device 1.

In the circuit shown in FIG. 5, the positive and negative electrodes of a voltage source 13 are connected to the first terminals of a switching circuit 14, and the positive electrode of the voltage source 13 is also connected to the magnetic body 2. The second terminals of the switching circuit 14 are connected to the solid heat accumulation members 3A and 3B. Further, the switching circuit 14 has switch elements fixed to the first terminals and movable simultaneously with each other. Each of the switch elements is selectively connected to the corresponding two second terminals. By virtue of this structure, when the positive electrode of the voltage source 13 is connected to one of the solid heat accumulation members 3A and 3B, the negative electrode of the voltage source 13 is connected to the other of the solid heat accumulation members 3A and 3B. In contrast, when the positive electrode of the voltage source 13 is connected to the other of the solid heat accumulation members 3A and 3B, the negative electrode of the voltage source 13 is connected to the one of the solid heat accumulation members 3A and 3B. In the example of FIG. 5, the switch elements of the switching circuit 14 are connected to the second terminals so that a positive bias is applied to the magnetic body 2 and the other solid heat accumulation member 3B, and a negative bias is applied to the one solid heat accumulation member 3A. In this state, a repulsive (electrostatic) force is exerted between the magnetic body 2 and the solid heat accumulation member 3B, and an attractive (electrostatic) force is exerted between the magnetic body 2 and the solid heat accumulation member 3A, with the result that the magnetic body 2 as a movable member is brought into contact with the solid heat accumulation member 3A. In contrast, when the switch elements of the switching circuit 14 are switched to be connected to the other two second terminals, the positive bias is applied to the magnetic body 2 and the other solid heat accumulation member 3A, and the negative bias is applied to the other solid heat accumulation member 3B, with the result that the magnetic body 2 is brought into contact with the solid heat accumulation member 3B.

By thus synchronizing the operation of the magnetic body 2 as a movable member with the application and removal of magnetic fields, using electrostatic forces, as is shown in FIGS. 3 and 4, a magnetic refrigeration cycle is realized.

Although in the magnetic refrigeration device 1 of the third embodiment shown in FIG. 5, the insulation layers (dielectric layer) 9 are provided on the surfaces of the solid heat accumulation members 3A and 3B, they may be provided on the surfaces of the magnetic bodies 2 and/or on the surfaces of the solid heat accumulation members 3A and 3B. By integrally forming the insulation layers 9 on the overall surfaces of the magnetic bodies and/or the solid heat accumulation members, thermal resistance can be reduced. It is preferable to form the insulation layers 9 of a material of high thermal conductivity, such as diamond-like carbon.

### (Fourth Embodiment)

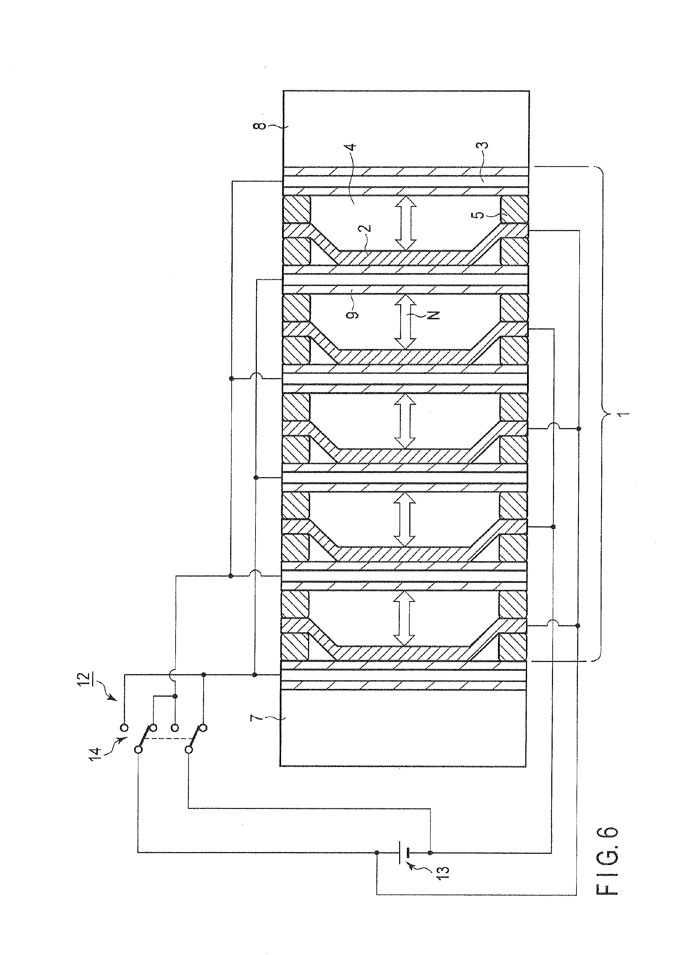

Referring to FIG. 6, a magnetic refrigeration system according to a fourth embodiment will be described. In a magnetic refrigeration device 1 incorporated in the magnetic refrigeration system shown in FIG. 6, driving forces for the magnetic body 2 (movable member) are given as electrostatic forces, and the solid heat accumulation member (movable member), with which each magnetic body 2 is brought into contact, is switched between the one solid heat accumulation member 3 (stationary member) and the other solid heat accumulation member 3 (stationary member).

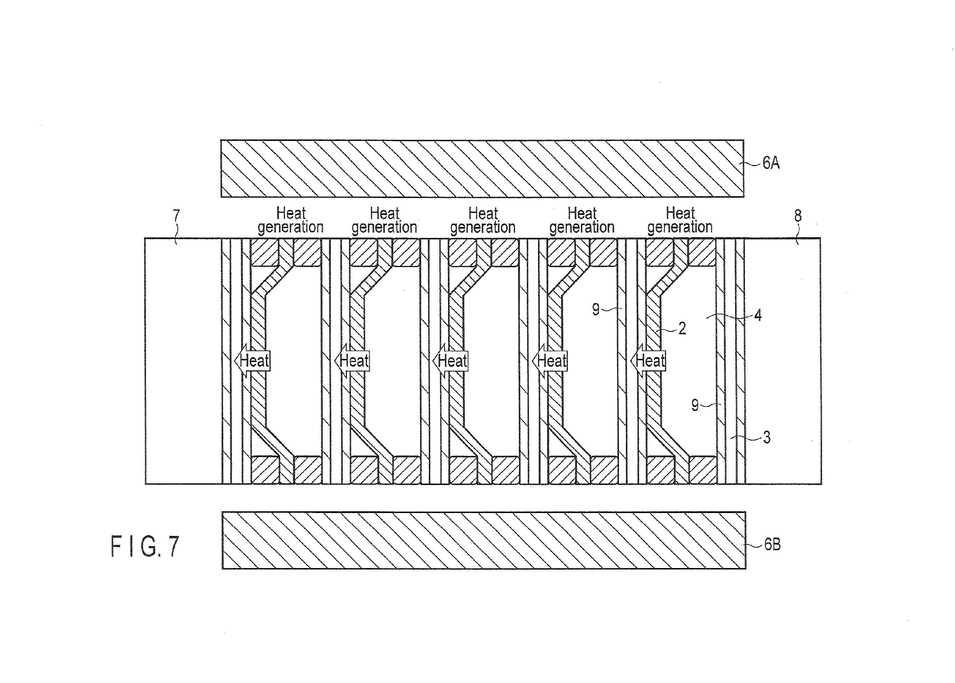

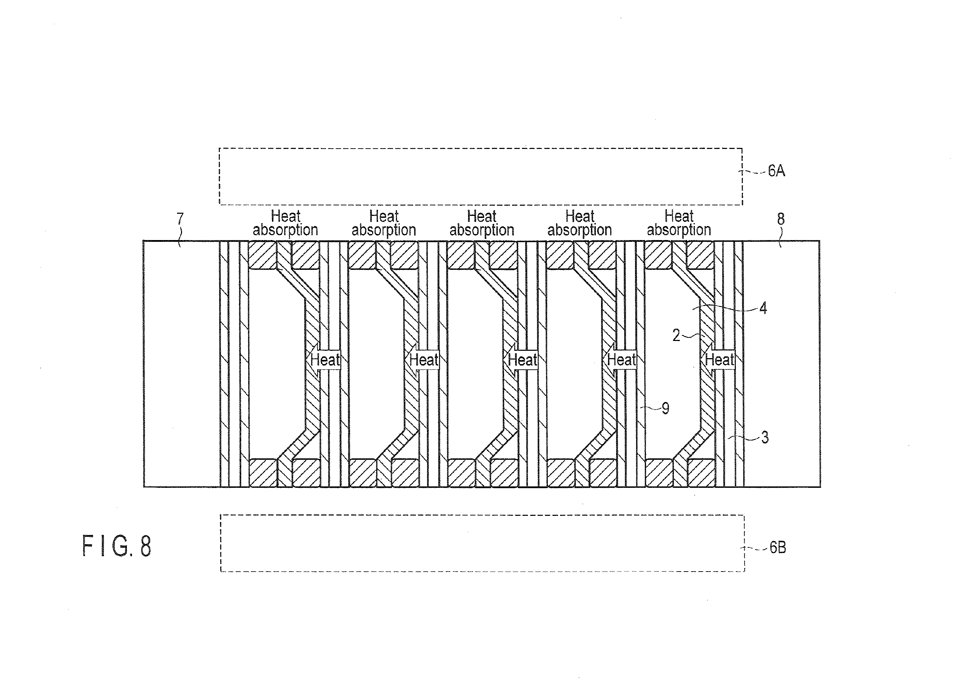

The magnetic refrigeration device shown in FIG. 6 is constructed as a device comprising a plurality of stacked basic units similar to the basic unit shown in FIG. 5. In the unit-stacked magnetic refrigeration device of FIG. 6, the magnetic bodies 2 as movable members are simultaneously operated in one direction or the other direction indicated by arrows N. FIGS. 7 and 8 show operation examples of the device of FIG. 6. More specifically, FIG. 7 shows a state in which magnetic fields are applied to the magnetic refrigeration device 1 by the magnetic field apply units 6A and 6B. In the state of FIG. 7, the temperatures of the magnetic bodies 2 are increased by the magnetocaloric effect, and are brought into contact with the corresponding left-side solid heat accumulation members 3 by electrostatic forces, whereby the magnetic bodies 2 dissipate heat to the solid heat accumulation members 3. FIG. 8 shows a state (a magnetic-field eliminated state) in which the magnetic fields applied to the magnetic refrigeration device 1 by the magnetic field apply units 6A and 6B are eliminated. In the magnetic-field eliminated state, the magnetic bodies 2 are reduced in temperature due to the magnetocaloric effect, and are brought into contact with the corresponding right-side solid heat accumulation members 3 by electrostatic forces, whereby the solid heat accumulation members 3 absorb heat from the magnetic bodies 2. By the series of operations mentioned above, heat is conducted from the low-temperature-side heat exchanger 8 to the high-temperature-side heat exchanger 7, and a temperature difference is given between the opposite ones of the solid heat accumulation members 3 by the magnetocaloric effect.

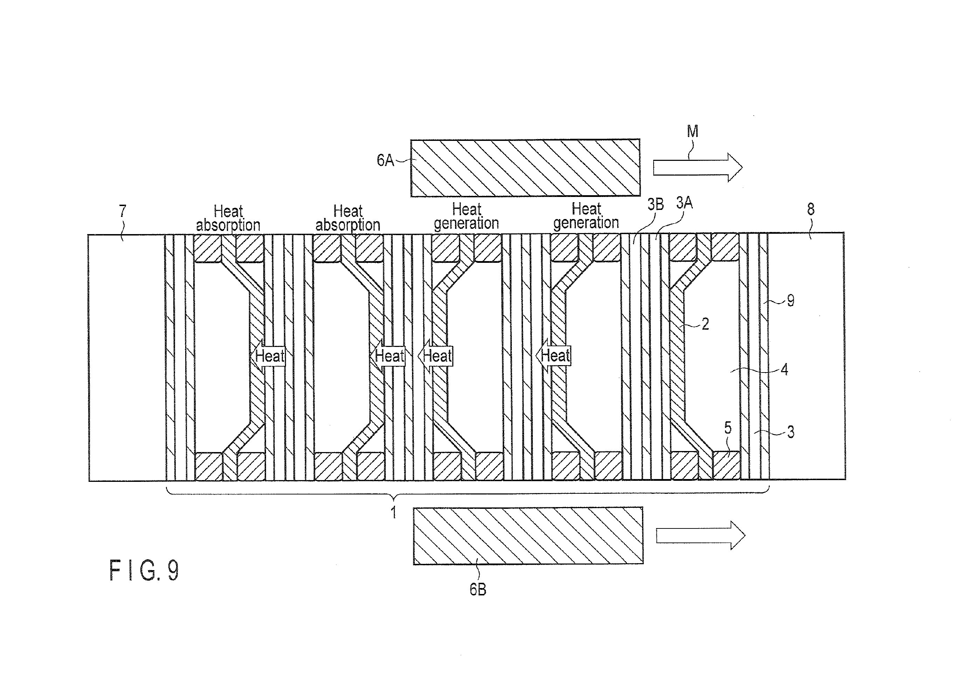

A description will now be given of a modification of the fourth embodiment, in which each of the magnetic bodies 2 as movable members in the magnetic refrigeration device 1 is controlled in accordance with movement of the magnetic field apply units 6A and 6B. In this case, as shown in FIG. 9, by forming each of the solid heat accumulation members 3 as stationary members to have a two-layer structure comprising first and second stationary pieces 3A and 3B, the magnetic bodies 2 (movable members) can be operated independently of each other. The stationary members 3A and 3B as the first and second stationary pieces can be realized by configuring the switching circuit 12 so that a positive or negative polarity voltage can be applied to the circuit independently of each other. When a positive bias is applied to the solid heat accumulation members 3A and 3B, the magnetic bodies 2, to which a positive bias is applied, are moved away from the solid heat accumulation members 3A and 3B as the first and second stationary pieces. In contrast, when a negative bias is applied to the solid heat accumulation members 3A and 3B, the magnetic bodies 2 are brought into contact with the members 3A and 3B as the first and second stationary pieces.

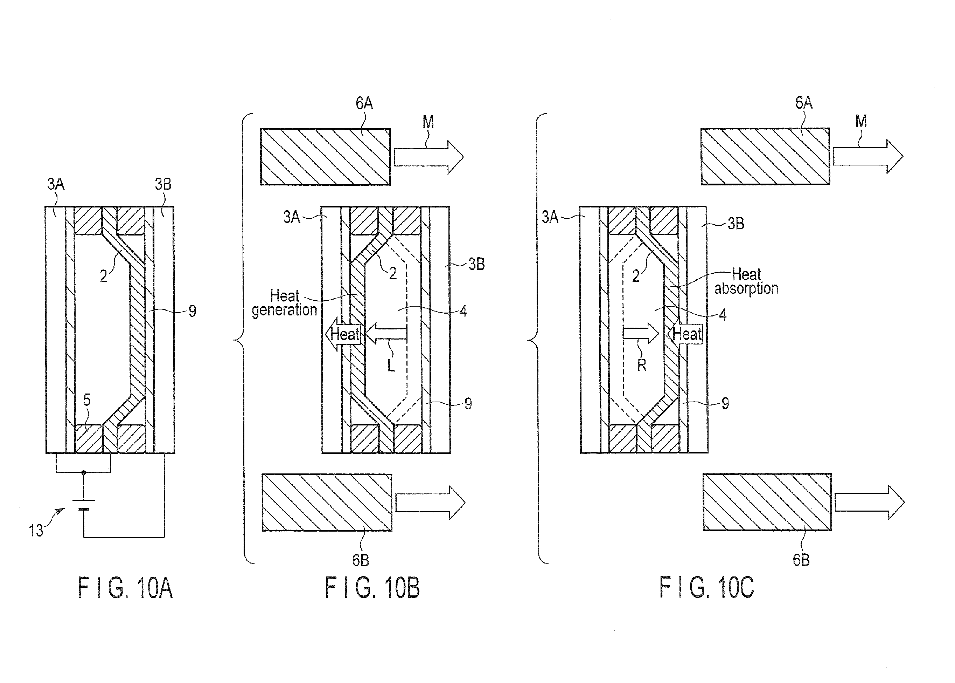

Alternatively, the magnetic bodies 2 as movable members may be efficiently moved utilizing both the magnetic attractive forces and the electrostatic attractive forces described in the second and third embodiments. FIGS. 10A, 10B and 10C are views useful in explaining how the magnetic bodies 2 as movable members are moved by both the magnetic attractive forces and the electrostatic attractive forces. A bias is applied to the magnetic refrigeration device 1 so that electrostatic attractive forces are applied in the forwarding direction M of the magnetic field apply units 6A and 6B, as shown in FIG. 10A. More specifically, a positive potential is applied to the solid heat accumulation member 3A (in FIGS. 10A to 10C, the left-hand solid heat-hand accumulation member 3A) located upstream of the magnetic body 2 and the magnetic field apply units 6A and 6B in the forwarding direction M, and a negative potential is applied to the solid heat accumulation member 3B (in FIGS. 10A to 10C, the right-hand solid heat accumulation member 3B) located downstream of the magnetic body 2 and the magnetic field apply units 6A and 6B in the forwarding direction M. Accordingly, an electrostatic repulsive force is exerted between the magnetic body 2 and the left-hand solid heat accumulation member 3A, while an electrostatic attractive force is exerted between the magnetic body 2 and the right-hand solid heat accumulation member 3B. As a result, the magnetic body 2 is brought into contact with the right-hand solid heat accumulation member 3B. The magnetic attractive forces generated by the magnetic field apply units 6A and 6B are each designed to be higher than the electrostatic attractive force. Therefore, in this magnetic refrigeration device, when the magnetic field apply units 6A and 6B approach the magnetic body 2, a magnetic field is applied to the magnetic body 2 to cause the magnetic body 2 to generate heat. Further, at this time, since the magnetic attractive force is greater than the electrostatic attractive force, the magnetic body 2 contacting the right-hand solid heat accumulation member 3B is moved toward the magnetic field apply units 6A and 6B (in the direction indicated by arrow L) and then brought into contact with the left-hand solid heat accumulation member 3A. When the magnetic field apply units 6A and 6B are moved and the magnetic fields applied to the magnetic body 2 are weakened, the temperature of the magnetic body 2 is reduced and the electrostatic attractive force becomes greater than the magnetic attractive force. As a result, the magnetic body 2 is moved in the forwarding direction of the magnetic field apply units 6A and 6B (in the direction indicated by arrow R) and then brought into contact with the right-hand solid heat accumulation member 3B, as is shown in FIG. 10C. Repetition of the above operations causes conduction of heat from the low-temperature-side heat exchanger 8 to the high-temperature-side heat exchanger 7.

Although in the embodiment of FIGS. 10A to 10C, a system is described in which the magnetic field apply units 6A and 6B are moved in one direction along the magnetic body 2, another system may be employed in which the magnetic field apply units 6A and 6B are reciprocated along the magnetic body 2.

### (Fifth Embodiment)

In a magnetic refrigeration system according to a fifth embodiment, the pressure in each space 4 of the magnetic refrigeration device 1 is kept low. Since each space 4 in the magnetic refrigeration device 1 is reduced in pressure, the thermal resistance therein is increased to thereby suppress reverse flow of heat from the high-temperature side to the low-temperature side, i.e., to enhance the thermal conduction efficiency.

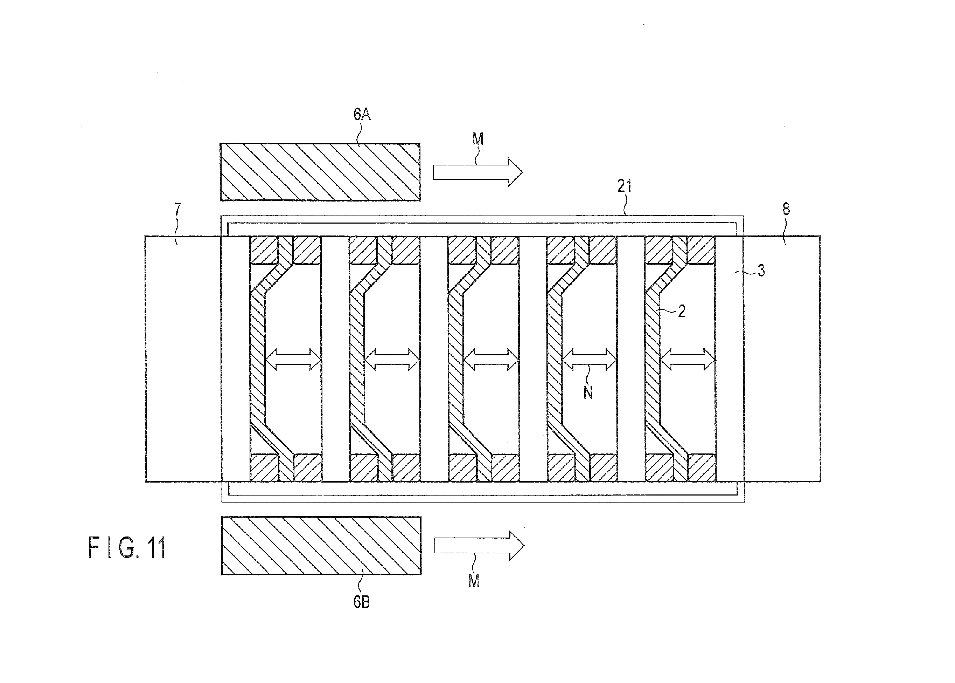

The magnetic refrigeration system of the fifth embodiment is realized by containing the magnetic refrigeration device 1 in a sealed decompression container 21 as shown in FIG. 11.

The decompression container 21 is formed of a nonmagnetic material, e.g., a resin such as plastic. Alternatively, the decompression container 12 may be formed of a metal, such as aluminum, to enhance its strength. However, in view of suppression of occurrence of eddy current due to elimination of magnetic fields, or in view of adiabatic performance, it is desirable to form the decompression container 12 of a resin having a high electrical resistance.

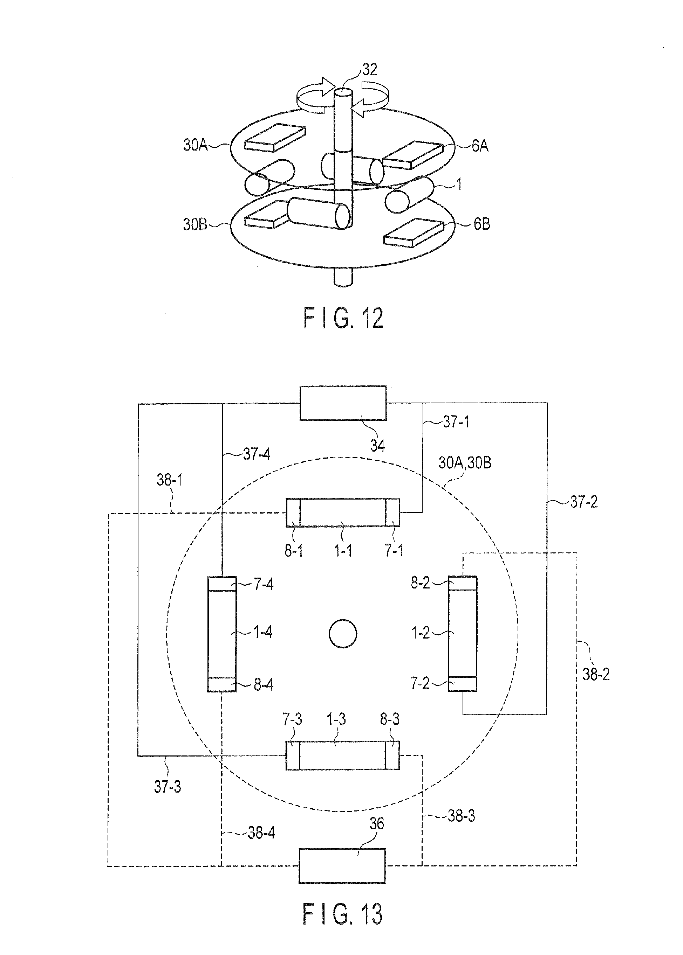

The magnetic refrigeration devices shown in FIGS. 1 to 11 can be realized as such a magnetic refrigeration system as shown in FIG. 12.

FIG. 12 is a schematic perspective view illustrating the magnetic refrigeration system of the fifth embodiment. Four magnetic refrigeration devices 1 having the structure shown in FIG. 1 are provided along a first circle, and two pairs of magnetic field apply units 6A and 6B are provided along second and third circles coaxially defined over and below the first circle. As one example, two magnetic field apply units 6A are secured to an upper rotary plate 30A that defines the second circle, and two magnetic field apply units 6B are secured to a lower rotary plate 30B that defines the third circle. The four magnetic refrigeration devices 1 are structured as a magnetic refrigeration device unit that includes the solid heat accumulation members 3 and the magnetic bodies 2 and excludes the contact drive unit 10 and the magnetic field apply units 6A and 6B.

The upper and lower rotary plates 30A and 30B are secured to a rotary shaft 32 located at the center of the first circle along which the magnetic refrigeration devices 1 are provided. About the rotary shaft 32, the upper and lower rotary plates 30A and 30B are rotated in synchronism with each other. The rotary shaft 32 is rotated by, for example, a motor (not shown). In accordance with the rotation, the magnetic field apply units 6A and 6B are repeatedly and simultaneously made to approach each magnetic refrigeration device 1 and depart therefrom. The repeated approaching and departing from the magnetic refrigeration devices 1 cause heat conduction in the devices 1 as mentioned above.

Further, although in the system of the fifth embodiment, two pairs of magnetic field apply units 6A and 6B are provided on the rotary plates 30A and 30B, one pair of, or three or more pairs of magnetic field apply units 6A and 6B may be provided. In view of stabilizing the rotation of the rotary plates 30A and 30B, it is desirable to arrange pairs of magnetic field apply units 6A and 6B point-symmetrical with respect to the rotary shaft 32.

Yet further, although in the system of the fifth embodiment, four magnetic refrigeration devices 1 are provided along the same circle, one to three magnetic refrigeration devices 1, or five or more magnetic refrigeration devices 1, may be provided.

FIG. 13 is a schematic plan view illustrating the configuration of a magnetic refrigeration system according to a sixth embodiment. As shown in FIG. 13, four magnetic refrigeration devices 1-1, 1-2, 1-3 and 1-4 are provided between the upper and lower rotary plates 30A and 30B along the same circle.

As shown, high-temperature-side heat exchangers 7-1, 7-2, 7-3 and 7-4 corresponding to the four magnetic refrigeration devices 1-1, 1-2, 1-3 and 1-4 are connected to a heat dissipation unit 34 thermally in parallel with each other. Similarly, low-temperature-side heat exchangers 8-1, 8-2, 8-3 and 8-4 corresponding to the four magnetic refrigeration devices 1-1, 1-2, 1-3 and 1-4 are connected to a heat absorption unit 36 thermally in parallel with each other.

The heat produced by a magnetic refrigeration cycle at the high-temperature-side heat exchangers 7-1, 7-2, 7-3 and 7-4 is conducted to the heat dissipation unit 34 via, for example, heat exchangers 37-1, 37-2, 37-3 and 37-4. On the other hand, the cold energy produced by a magnetic refrigeration cycle at the low-temperature-side heat exchangers 8-1, 8-2, 8-3 and 8-4 is conducted to the heat absorption unit 36 via, for example, heat exchangers 38-1, 38-2, 38-3 and 38-4.

Conduction of heat and cold energy to the heat dissipation unit 34 and the heat absorption unit 36 indicated by the solid and broken lines in FIG. 13 can be realized utilizing a known heat exchanging gas or liquid, or utilizing solid heat conduction.

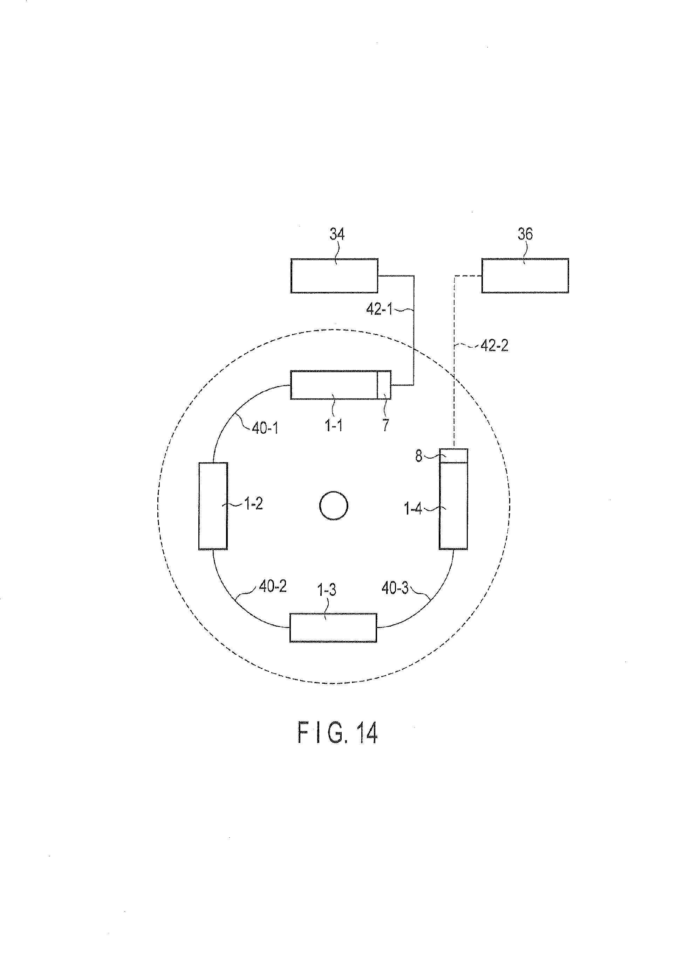

FIG. 14 is a schematic plan view illustrating the structure of a magnetic refrigeration system according to a seventh embodiment. In the seventh embodiment shown in FIG. 14, four magnetic refrigeration devices 1-1, 1-2, 1-3 and 1-4 are connected thermally in series, unlike the sixth embodiment shown in FIG. 13.

The adjacent ends of the magnetic refrigeration devices 1-1, 1-2, 1-3 and 1-4 are connected to each other via heat conductors 40-1, 40-2 and 40-3. A high-temperature-side heat exchanger 7 is coupled to the other end of the magnetic refrigeration device 1-1 as an end device of the four magnetic refrigeration devices 1-1, 1-2, 1-3 and 1-4, and is connected to a heat dissipation unit 34 via a heat conductor 42-1. Similarly, a low-temperature-side heat exchanger 8 is coupled to the other end of the magnetic refrigeration device 1-4 as the other end device, and is connected to a heat absorption unit 36 via a heat conductor 42-2.

Further, the magnetic transition temperature of the magnetic bodies of the magnetic refrigeration device 1-1 with the high-temperature-side heat exchanger 7 is set higher than that of the magnetic bodies of the magnetic refrigeration device 1-4 with the low-temperature-side heat exchanger 8. For instance, the magnetic transition temperature is gradually reduced in the order of from the magnetic bodies of the magnetic refrigeration device 1-1 with the high-temperature-side heat exchanger 7, through the magnetic bodies of the adjacent magnetic refrigeration devices 1-2 and 1-3, to the magnetic bodies of the last magnetic refrigeration device 1-4 with the low-temperature-side heat exchanger 8. Thus, the magnetic bodies of the last magnetic refrigeration device 1-4 has the lowest magnetic transition temperature.

In the refrigeration magnetic refrigeration system of the seventh embodiment shown in FIG. 14, the high-temperature-side heat exchanger 7 of the magnetic refrigeration devices constructed as above is thermally connected to the heat dissipation unit 34, and the low-temperature-side heat exchanger 8 is thermally connected to the heat absorption unit 36.

Since in the embodiment of FIG. 14, magnetic refrigeration devices with magnetic bodies having different magnetic transition temperatures are connected in series, a high magnetic refrigeration temperature difference can be obtained.

The above-described embodiments are merely examples, and the elements of the embodiments may be combined appropriately.

Further, although in the above embodiments, the magnetic field apply units of the magnetic field apply/eliminate mechanism are rotated, they may be reciprocated with respect to the magnetic refrigeration devices. In this case, it is preferable to use a linear driving actuator or a cam mechanism for converting the rotational motion into linear motion. Furthermore, the relative motion of the magnetic field apply units and the magnetic refrigeration devices may be manually realized, or be realized utilizing part of the driving force of a vehicle, or utilizing natural energy, such as wind power, wave power or water power.

Although in the above embodiments, the elements, which may be incorporated in the magnetic refrigeration device or system, have not been described, the elements required for the magnetic refrigeration device or system may be selected and used appropriately.

As described above, the magnetic refrigeration devices of the embodiments do not require a refrigerant and hence can realize a high-speed refrigeration cycle. Accordingly, it is possible to provide a compact magnetic refrigeration device of a high output. Further, it is also possible to provide a compact magnetic refrigeration system of a high output by incorporating therein the high-output compact magnetic refrigeration device.

Thus, there is provided a compact, high-output magnetic refrigeration device and system of a high refrigeration efficiency.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A magnetic refrigeration device **characterized by** comprising:
a plurality of stationary members arranged in parallel with each other, with gaps (4) defined between adjacent ones of the stationary members, each of the stationary members being formed of one of a magnetic body (2) having a magnetocaloric effect, and a solid heat accumulation member (3, 3A, 3B) having a heat accumulation effect, the adjacent ones of the stationary members opposing each other;
a plurality of movable members arranged in parallel with each other, and permitted to be brought into contact with the adjacent stationary members within the respective gaps (4) and thermally connected to the adjacent stationary members, each of the movable members being formed of the other of the magnetic body (2) and the solid heat accumulation member (3, 3A, 3B);
a magnetic field apply unit (6A, 6B) configured to start and stop application of a magnetic field to the magnetic body (2); and
a moving mechanism configured to selectively bring the movable members to the corresponding stationary members in synchronism with the start and stop of the application of the magnetic field of the magnetic field apply unit (6A, 6B).

2. The magnetic refrigeration device according to claim 1, **characterized in that** the moving mechanism (10) comprises a driving unit configured to drive the movable members using an external magnetic attraction force.

3. The device according to claim 1, **characterized in that** the moving mechanism comprises a driving unit configured to drive the movable members using an electrostatic force.

4. The device according to claim 3, **characterized in that** an insulating layer (9) is formed on at least one of the stationary member and the movable member opposing each other with the corresponding gap.

5. The device according to claim 1, **characterized by** further comprising sealing means (21) for maintaining each of the gaps (4) at a reduced pressure.

6. A magnetic refrigeration system **characterized by** comprising the magnetic refrigeration device recited in claim 1.

7. A magnetic refrigeration system **characterized by** comprising:
a plurality of magnetic refrigeration devices (1-1, 1-2, 1-3, 1-4) arranged substantially along a circle and each including:
a stationary members arranged in parallel with each other, with gaps (4) defined between adjacent ones of the stationary members, each of the stationary members being formed of one of a magnetic body (2) having a magnetocaloric effect, and a solid heat accumulation member (3, 3A, 3B) having a heat accumulation effect, the adjacent ones of the stationary members opposing each other; and
a plurality of movable members arranged in parallel with each other, and permitted to be brought into contact with the adjacent stationary members within the respective gaps (4) and thermally connected to the adjacent stationary members, each of the movable members being formed of the other of the magnetic body (2) and the solid heat accumulation member (3, 3A, 3B);
at least one magnetic field apply unit (6A, 6B) provided along the circle over or below the plurality of magnetic refrigeration devices (1-1, 1-2, 1-3, 1-4) and configured to start and stop application of a magnetic field to the magnetic body (2); and
a moving mechanism configured to selectively bring the movable members to the corresponding stationary members in synchronism with the start and stop of the application of the magnetic field of the magnetic field apply unit (6A, 6B).

8. The system according to claim 7, **characterized in that** the plurality of magnetic refrigeration devices (1-1, 1-2, 1-3, 1-4) are thermally connected to each other in series or in parallel.
